# FASCICULE DE BREVET EUROPEEN

(11) **EP 3 532 349 B1**
(45) Date de publication et mention de la délivrance du brevet: **09.03.2022**
(21) Numéro de dépôt: 17791035.3
(22) Date de dépôt: 20.10.2017
(51) Int. Cl.: B60S 1/48, B60S 1/08

(54) **DISPOSITIF ET PROCEDE D'ESSUYAGE ET/OU DE NETTOYAGE D'UNE SURFACE VITREE D'UN VEHICULE A L'AIDE D'UN LIQUIDE ACTIF**
VORRICHTUNG UND VERFAHREN ZUM WISCHEN UND/ODER REINIGEN EINER GLASFLÄCHE EINES FAHRZEUGS UNTER VERWENDUNG EINER AKTIVEN FLÜSSIGKEIT
DEVICE AND METHOD FOR WIPING AND/OR CLEANING A GLAZED SURFACE OF A VEHICLE USING AN ACTIVE LIQUID

(30) Priorité: 28.10.2016 FR 1660497
(43) Date de publication de la demande: 04.09.2019
(73) Titulaire: Valeo Systèmes d'Essuyage, 78322 Le Mesnil Saint Denis (FR)
(72) Inventeur: KOLANOWSKI, Grégory, 63500 Issoire (FR); THEBAULT, Denis, 63500 Issoire (FR)
(74) Mandataire: Valeo Visibility
(86) Numéro de dépôt international: PCT/EP2017/076916
(87) Numéro de publication internationale: WO 2018/077760

(56) Documents cités:
- FR-A1- 2 957 574
- FR-A1- 2 957 873
- FR-A1- 3 006 965

## Description

L'invention se rapporte aux domaines de l'essuyage et/ou du nettoyage des surfaces vitrées d'un véhicule automobile. Elle concerne plus particulièrement les dispositifs et procédés permettant de réaliser un nettoyage de ces surfaces vitrées à l'aide d'un produit spécifique d'efficacité supérieure à celle d'un liquide lave-glace conventionnel, et elle trouve une application particulièrement avantageuse dans le domaine du dégivrage ou du démoustiquage de telles surfaces vitrées, applications préférées, mais non exclusives, dans le cadre desquelles l'invention sera préférentiellement décrite dans le présent document.

Les essuie-glaces pour véhicules automobiles sont conçus pour retirer, par balayage, les liquides et salissures qui peuvent perturber la vision que le conducteur a de son environnement. Ces essuie-glaces comprennent généralement un ou plusieurs bras d'entraînement qui effectuent un mouvement de va-et-vient angulaire autour d'un axe de rotation, et des balais d'essuyage allongés équipés de lames racleuses réalisées dans un matériau élastique, chaque balai d'essuyage étant porté par un bras d'entraînement. En frottant contre une surface vitrée, avant ou arrière, du véhicule, les lames racleuses en balaient l'eau et un certain nombre de salissures, et les évacuent en dehors du champ de vision du conducteur. Dans leur mouvement de va-et-vient angulaire sur la surface vitrée, l'ensemble formé par chaque bras d'entraînement et le balai d'essuyage qu'il porte est mobile entre une position de repos, dans laquelle il est positionné avant que commence une opération d'essuyage et/ou de nettoyage, c'est-à-dire en bas de pare-brise et au voisinage du capot du véhicule, et une position extrême qui correspond à la position la plus éloignée de la position de repos atteinte par l'ensemble « bras-balai » dans son mouvement angulaire, c'est-à-dire à l'opposé de la position de repos par rapport à la portion angulaire totale parcourue par l'ensemble « bras-balai ».

Il est connu, notamment dans le document FR2957873A1, de modifier le déplacement de l'ensemble « bras-balai » en divisant la portion angulaire totale en secteurs angulaires élémentaires entre lesquels l'ensemble « bras-balai » est mis à l'arrêt pendant une durée déterminée entre deux déplacements. L'ensemble «bras-balai» effectue ainsi des mouvements successifs sur la surface vitrée entre la position de repos et la position extrême entrecoupés de temps de pause. Après chacun de ces mouvements successifs, on projette sur la surface vitrée un liquide actif que l'on laisse agir pendant une durée déterminée. Dans un tel processus, le moteur couramment utilisé pour mettre en œuvre les déplacements angulaires ainsi que les temps d'arrêt de l'ensemble « bras-balai » est un moteur électrique du type pas à pas, connu sous la dénomination de moteur électronisé. Ce moteur électronisé est en mesure de piloter à chaque instant la position angulaire et le sens de rotation de l'ensemble « bras-balai ». Pour ce faire, un tel moteur embarque une électronique de commande, des capteurs et d'une manière générale des composants qui augmentent significativement le cout d'exploitation d'un tel moteur. Ceci augmente le coût du véhicule et limite la mise en place de tels dispositifs de nettoyage sur des gammes de véhicule dite d'entrée ou de moyenne gamme.

La présente invention a pour but de proposer un dispositif de dégivrage, ou plus généralement, de nettoyage d'une surface vitrée d'un véhicule à l'aide d'un liquide actif spécifique, c'est-à-dire différent du liquide lave-glace contenu dans le réservoir de lave-glace du véhicule, qui présente un coût réduit et qui soit d'un pilotage simple et peu coûteux.

Pour atteindre son but, l'invention propose un dispositif d'essuyage et de nettoyage d'une surface vitrée d'un véhicule automobile, comprenant au moins :
- un moteur électrique à courant continu à sens unique de rotation apte à déplacer au moins un ensemble « bras-balai » formé par un bras d'entraînement et un balai d'essuyage par l'intermédiaire d'une timonerie, ledit ensemble « bras-balai » étant déplacé selon un mouvement va et vient angulaire entre une position de repos et une position extrême opposée à la position de repos par rapport à un secteur angulaire sur la surface vitrée,
- un dispositif de distribution d'un liquide actif sur la surface vitrée, le liquide actif étant de préférence un liquide dégivrant ou un liquide démoustiquant,
- un moyen de commande configuré pour contrôler, d'une part, le fonctionnement du moteur pour arrêter l'ensemble "bras-balai" pendant une durée non-nulle et, d'autre part, la distribution de liquide actif par le dispositif de distribution,
le dispositif est caractérisé en ce que le moyen de commande est configuré pour contrôler la distribution de liquide actif et le moteur avec un décalage temporel non-nul entre eux et est configuré pour activer le moteur et la distribution de liquide actif simultanément au cours d'une période du procédé.

L'invention prévoit ainsi l'utilisation d'un moteur électrique à bas coût dans le cadre d'un procédé adapté pour dégivrer ou démoustiquer une surface vitrée d'un véhicule. Le moyen de commande est configuré pour interrompre l'alimentation électrique du moteur pendant une durée non-nulle alors que le liquide actif est projeté sur la surface vitrée.

Le dispositif d'essuyage et de nettoyage selon l'invention peut comprendre l'une des caractéristiques listées ci-dessous, prise seul ou en combinaison :
- le moyen de commande est configuré pour contrôler le fonctionnement du moteur de manière à arrêter l'ensemble "bras-balai" lorsque l'ensemble "bras-balai" est dans sa position de repos et/ou sa position extrême
- le dispositif de distribution comprend au moins un ensemble de buses de distribution agencées sur le balai d'essuyage, sur le bras d'entraînement ou sur ces deux composants,
- le dispositif de distribution comprend au moins un réservoir de stockage d'un liquide actif, un ensemble de canalisations d'acheminement dudit liquide actif entre le réservoir de stockage et les buses de distribution, et une pompe apte à réaliser la circulation de ce liquide actif dans cet ensemble de canalisations et ces buses de distribution,
- le moyen de commande contrôle le moteur par une succession d'ordres de mise en marche et d'arrêt de celui-ci.

L'invention propose ainsi un pilotage exclusivement temporel de la totalité de l'opération effectuée à l'aide du liquide actif, qu'il s'agisse d'une opération de dégivrage ou de tout autre type d'opération spécifique pour laquelle l'utilisation d'un liquide lave-glace conventionnel n'est pas suffisante. Par la mise en œuvre d'un décalage temporel entre la commande de la pompe de circulation de liquide actif et la commande d'un mouvement angulaire de l'ensemble « bras-balai », l'invention permet de s'affranchir de l'inertie du circuit de fluide constitué par les canalisations d'acheminement et les buses de distribution, et de garantir la présence d'une quantité prédéfinie de ce liquide actif sur la surface vitrée au moment où l'ensemble « bras-balai » effectue un déplacement angulaire Lorsque le liquide actif a été projeté sur la surface vitrée avant tout mouvement des balai d'essuie-glace, un tel décalage permet également au liquide d'agir, c'est-à-dire de faire fondre le givre ou la neige ou de dissoudre la matière organique des insectes..

En outre, le dispositif selon l'invention peut comprendre un dispositif de projection d'un liquide de nettoyage, notamment lave-glace, distinct du dispositif de distribution de liquide actif, les deux dispositifs pouvant toutefois comprendre des parties communes. A cet effet, le dispositif selon l'invention peut aussi comprendre un dispositif de projection d'un liquide de nettoyage, notamment lave-glace, qui comprend un bocal de retenu dudit liquide distinct du réservoir de stockage du liquide actif. De préférence, au moins une partie de l'ensemble de canalisations d'acheminement et les buses de distribution sont empruntés par le liquide de nettoyage et par le liquide actif.

Ledit dispositif de projection peut comprendre une pompe supplémentaire apte à réaliser la circulation du liquide de nettoyage dans cet ensemble de canalisations et ces buses de distribution.

Le dispositif d'essuyage et de nettoyage selon l'invention peut comprendre en outre l'une des caractéristiques listées ci-dessous :
- le liquide actif est un liquide dégivrant. Un tel liquide comprend un principe actif qui fait fondre le givre ou la neige en un temps compris entre 2 et 90 secondes.
- le liquide actif est un liquide démoustiquant. Un tel liquide comprend un principe actif qui dissout la matière organique des insectes écrasés sur la surface vitrée en un temps compris entre 2 et 60 secondes.
- les moyens de commande sont intégrés à un ensemble de pilotage d'un dispositif essuie-glace du véhicule.
- le dispositif d'essuyage et de nettoyage selon l'invention peut être actionné automatiquement à partir d'un signal, généré par un capteur, représentatif de l'état de la surface vitrée (S) considérée,
- alternativement ou de manière complémentaire, les moyens de commande sont actionnés par un utilisateur du véhicule au moyen d'une interface spécifique solidaire du véhicule ou au moyen d'une interface mobile appropriée avec l'ensemble de pilotage du dispositif essuie-glace du véhicule.

Selon une de ses caractéristiques, l'invention prévoit que les moyens de commande précités réalisent la commande du moteur par une succession d'ordres de mise en marche et d'arrêt de celui-ci. Le pilotage de ce moteur est ainsi un pilotage temporel et non plus un pilotage angulaire fonction de la position de l'ensemble « bras-balai » sur la surface vitrée.

L'invention permet ainsi de réaliser un essuyage et/ou un nettoyage d'une surface vitrée du véhicule au moyen d'un liquide actif spécifique, différent d'un liquide lave-glace conventionnellement utilisé, avec des moyens simples, peu coûteux, et d'une utilisation souple, puisque le pilotage temporel du moteur continu, ainsi que le pilotage temporel du décalage entre la commande de ce moteur et la commande de la pompe de circulation de liquide actif, réalisés par les mêmes moyens de commande, peuvent être ajustés en fonction de paramètres prédéfinis facilement modifiables.

L'invention s'étend également à un procédé d'essuyage et de nettoyage d'une surface vitrée mettant en œuvre un dispositif d'essuyage et de nettoyage selon tel que défini dans le présent document, procédé au cours duquel :
- le moyen de commande active le moteur et la distribution de liquide actif avec un décalage temporel non-nul entre eux, la distribution de liquide actif étant de préférence activée avant le moteur et
- le moyen de commande active le moteur et la distribution de liquide actif simultanément au cours d'une période de fonctionnement du procédé.

De manière préférentielle, le procédé d'essuyage et de nettoyage d'une surface vitrée peut prévoir que :
- le moyen de commande active le moteur pour amener l'ensemble "bras-balai" depuis la position de repos à la position extrême sur la surface vitrée,
- le moyen de commande désactive le moteur après une première durée déterminée correspondant au temps nécessaire pour passer de la position de repos à la position extrême,
- le moyen de commande active la distribution du liquide actif et maintient désactivé le moteur pendant un temps correspondant au remplissage du dispositif de distribution par le liquide actif. La durée de ce temps correspondant au remplissage du dispositif de distribution est avantageusement définie pour que la quantité de liquide actif acheminée par la pompe soit suffisante pour remplir les canalisations du circuit d'acheminement de ce liquide actif, et suffisamment faible pour qu'aucun liquide actif ne soit, à ce stade, distribué sur la surface vitrée,

- le moyen de commande active le moteur et le dispositif de distribution simultanément pendant une deuxième durée déterminée correspondant au temps nécessaire pour passer de la position extrême à la position de repos. Le mouvement angulaire de cet ensemble "bras-balai", dans cette étape, s'effectue donc simultanément avec la distribution de liquide actif via les buses de distribution par exemple agencées sur le balai d'essuyage, et ce, jusqu'à ce que ledit ensemble "bras-balai" ait atteint sa position de repos. Ceci permet, notamment, de répartir uniformément le liquide actif sur la surface vitrée,
- le moyen de commande désactive le moteur et le dispositif de distribution et les maintient désactivés pendant un temps d'action du liquide actif. Avantageusement, la durée de ce temps d'action est définie pour que le liquide actif déposé et étalé sur la surface vitrée au cours de la précédente étape ait le temps d'agir sur la substance à retirer de cette surface vitrée, qu'il s'agisse de givre ou de glace, ou qu'il s'agisse de tout autre substance, notamment une matière organique.

Selon différentes variantes de réalisation, l'invention peut prévoir que l'opération réalisée sur la surface vitrée est achevée à l'issue de cette dernière étape, ou elle peut prévoir qu'à l'issue de cette quatrième étape, un nouveau cycle des étapes décrites ci-dessus soit à nouveau commandé, et ainsi de suite jusqu'à ce que l'opération réalisée sur la surface vitrée soit considérée comme achevée. Dans ce cas, un capteur approprié pourra être avantageusement placé en regard de la surface vitrée en question, capteur apte à générer un signal représentatif de l'état de cette surface et à transmettre ce signal au moyen de commande, et ce moyen de commande sera configuré pour réaliser autant d'itérations du cycle d'étapes précédemment décrit que nécessaire jusqu'à ce que le signal représentatif de l'état de la surface vitrée prenne une valeur prédéfinie.

Selon une option, préalablement à l'activation du moteur pour amener l'ensemble "bras-balai" depuis la position de repos à la position extrême sur la surface vitrée, le moyen de commande active la distribution du liquide actif sur la surface vitrée et maintient désactivé le moteur pendant un temps d'action du liquide actif.

Selon une autre option, simultanément à l'activation du moteur pour amener l'ensemble "bras-balai" depuis la position de repos à la position extrême sur la surface vitrée, le moyen de commande active la distribution du liquide actif sur la surface vitrée.

Selon un exemple de mise en œuvre, l'activation du moteur pour amener l'ensemble "bras-balai" depuis la position de repos à la position extrême sur la surface vitrée est réalisée par une pluralité de pas et de temps d'arrêt successifs.

Une fois la position extrême atteinte, le moyen de commande désactive le moteur et le dispositif de distribution et les maintient désactivés pendant un temps d'action du liquide actif.

Tel qu'il vient d'être décrit, le procédé selon l'invention est un procédé simple, constitué d'un nombre limité d'étapes dont la commande peut être réalisée de manière simple et peu coûteuse. Il est, par ailleurs, d'une durée relativement limitée : de l'ordre de quelques secondes à une ou deux minutes pour l'ensemble des étapes, ce qui facilite sa mise en œuvre.

Ces différentes variantes, ainsi que d'autres caractéristiques et avantages de la présente invention seront détaillées dans la description qui suit, avec l'aide des dessins suivants :
- la Figure 1 est une vue schématique d'un dispositif selon l'invention agencé sur un pare-brise d'un véhicule automobile,
- la Figure 2 est une représentation schématique du déroulement d'un premier mode de réalisation du procédé selon l'invention,
- la Figure 3 est une représentation schématique du déroulement du procédé selon une première variante de réalisation de l'invention,
- la Figure 4 est une représentation schématique du déroulement du procédé selon une deuxième variante de l'invention,
- et la Figure 5 est une représentation schématique du déroulement du procédé selon une troisième variante de l'invention.

Il est tout d'abord à noter que si les figures exposent l'invention de manière détaillée pour sa mise en œuvre, elles peuvent bien entendu servir à mieux définir l'invention le cas échéant.

Dans ce qui suit, l'invention sera décrite dans son application privilégiée au dégivrage d'une surface vitrée d'un véhicule automobile. Par exemple, il peut s'agir du dégivrage d'un pare-brise d'un tel véhicule. Il est néanmoins entendu que l'invention trouve également une application privilégiée au démoustiquage d'une surface vitrée d'un véhicule automobile, notamment son pare-brise.

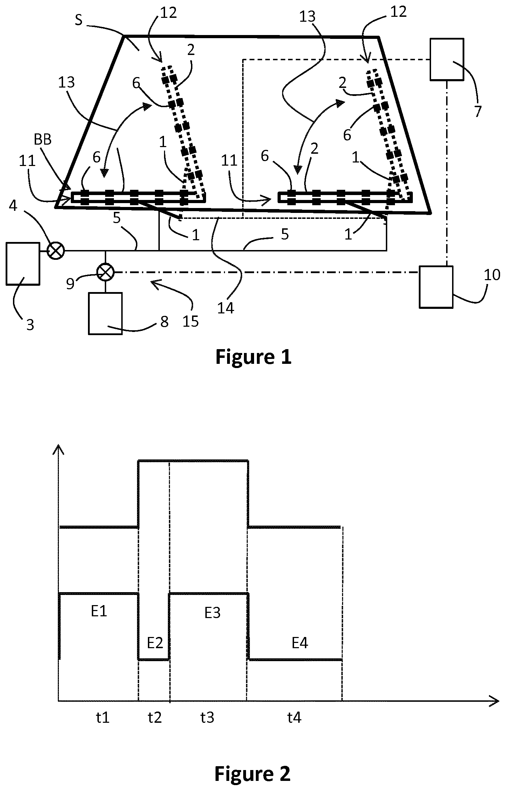

En référence à la Figure 1, une surface vitrée S d'un véhicule automobile est équipée d'un dispositif d'essuyage et de nettoyage comprenant un ou plusieurs bras d'essuie-glace 1 porteurs chacun d'un balai d'essuyage 2. Dans ce qui suit, on considèrera chaque bras d'essuie-glace 1 et le balai d'essuyage 2 qu'il porte comme un ensemble désigné par la dénomination d'ensemble "bras-balai" BB. Dans l'exemple illustré par la Figure 1, deux ensembles "bras-balai" BB sont ainsi agencés sur la surface vitrée S.

Pour retirer autant de salissures que possible de cette surface vitrée S, le dispositif d'essuyage et de nettoyage peut comprendre un dispositif de projection de liquide lave-glace comprenant un bocal 3 de liquide lave-glace relié, par une pompe de circulation 4 et un ensemble de canalisations d'acheminement 5, à un ensemble de buses de distribution 6 agencées sur chaque balai d'essuyage 2. Selon l'exemple illustré par la Figure 1, les buses de distribution 6 sont agencées longitudinalement de chaque côté de chaque balai d'essuyage 2. Selon une variante de réalisation, ces buses de distribution 6 peuvent également être disposées sur un seul côté du balai d'essuyage 2.

De manière alternative ou complémentaire, de telles buses de distribution peuvent être ménagées sur un capot du véhicule, sur une baie de pare-brise du véhicule ou sur le bras d'entraînement 1 du balai d'essuyage 2.

Lors d'une opération d'essuyage et/ou de nettoyage de la surface vitrée S, chaque ensemble "bras-balai" BB est commandé par un moteur 7 pour se déplacer angulairement selon un mouvement de va-et-vient sur la surface vitrée S. Plus précisément, sur la Figure 1 sont représentées, respectivement en traits continus et en traits discontinus, la position de repos 11 et la position extrême 12 que chaque ensemble "bras-balai" BB peut prendre sur la surface vitrée S lors d'une opération d'essuyage et/ou de nettoyage de celle-ci. Entre cette position de repos et la position extrême, l'ensemble «bras-balai» parcourt un secteur angulaire 13 du pare-brise dont le sommet est confondu avec l'axe de rotation du bras d'entraînement 1.

La position de repos 11, en traits pleins, représente la position de chaque ensemble "bras-balai" BB avant que l'opération d'essuyage et/ou de nettoyage commence. Selon l'exemple représenté par la Figure 1, dans cette position de repos, chaque ensemble "bras-balai" BB est disposé en partie inférieure de la surface vitrée S, par exemple le long d'une baie de pare-brise. La position extrême 12, en traits discontinus sur la Figure 1, correspond à la position la plus éloignée de la position de repos que prend l'ensemble "bras-balai" BB lors de l'opération d'essuyage et/ou de nettoyage de la surface vitrée S. La position extrême 12 et la position de repos 11 borde angulairement le secteur angulaire 13. La position extrême 12 est celle où le balai d'essuyage 2 est parallèle, ou sensiblement parallèle, à l'un des montants de pare-brise du véhicule.

Selon l'invention, le moteur 7 est un moteur électrique à courant continu à sens unique de rotation. De manière connue, en tournant à une vitesse Ω sensiblement constante dans un même sens de rotation, il entraîne par un système de timonerie 14, l'ensemble "bras-balai" BB dans un mouvement de va-et-vient entre leur position de repos 11 et leur position extrême 12. Fiable et robuste, un tel moteur est, en outre, d'un coût réduit et d'une production aisée en grande série. Un tel moteur tourne toujours dans le même sens de rotation. Il peut comprendre trois charbons pour le commander en petite vitesse et en grande vitesse.

Pour réaliser un nettoyage spécifique de la surface vitrée S, ou pour dégivrer celle-ci au moyen d'un liquide actif approprié, l'invention prévoit un dispositif de distribution 15 du liquide dit actif. Ce liquide est ici qualifié d'actif pour le distinguer du liquide lave-glace contenu dans le bocal 3. Il est actif en ce sens que son pouvoir de fonte ou de dissolution, notamment vis-à-vis des moustiques, est rapide au regard de celui du liquide lave-glace.

Un tel dispositif de distribution 15 peut comprendre un réservoir de stockage 8 de ce liquide actif, équipé d'une pompe de circulation 9, le réservoir de stockage 8 et la pompe de circulation 9 étant reliés à l'ensemble de canalisations d'acheminement 5 et, par-là, aux buses de distribution 6 agencées sur les balais d'essuyage 2.

Selon différents modes de réalisation de l'invention, la pompe 9 de circulation de liquide actif peut être distincte de la pompe 4 de circulation de liquide lave-glace, ou ces deux pompes peuvent ne faire qu'une, un ensemble de vannes étant alors avantageusement prévu pour permettre la circulation de l'un ou l'autre de ces fluides.

Selon l'exemple illustré sur la figure 1, les mêmes canalisations et buses de distribution sont partagées par le dispositif de distribution 15 de liquide actif et par le dispositif de projection de liquide lave-glace. Alternativement, le dispositif d'essuyage et de nettoyage selon l'invention peut comprendre deux circuits distincts, le premier d'entre eux étant dédié au dispositif de distribution de liquide actif et le second étant spécifique du dispositif de projection de liquide lave-glace.

Le dispositif selon l'invention comporte également des moyens de commande 10 aptes à commander ou contrôler, d'une part, la mise en marche et l'arrêt du moteur 7 et, d'autre part, la mise en marche et l'arrêt de la distribution de liquide actif, notamment via le pilotage de la pompe 9 de circulation de ce liquide actif. Il apparaît clairement que, dans le cas où la pompe 9 de circulation de liquide actif et la pompe 4 de circulation de liquide lave-glace ne font qu'une, les moyens de commande 10 sont avantageusement aptes à commander sélectivement l'ensemble de vannes permettant la circulation spécifique de l'un ou l'autre de ces fluides. Avantageusement, les moyens de commande 10 sont configurés pour alimenter ou interrompre l'alimentation de l'énergie électrique du moteur électrique 7. Ce dernier est ainsi piloté temporellement, par l'intervalle de temps qui sépare une commande de démarrage d'une commande d'arrêt.

Les moyens de commande 10 destinés à commander ou contrôler la mise en marche et l'arrêt du moteur 7 peuvent comprendre un capteur de position. Un ou plusieurs capteurs peuvent notamment être adaptés pour détecter la position extrême ou la position de repos de l'ensemble "bras-balai" BB .

Selon une caractéristique de l'invention, les moyens de commande 10 sont aptes à arrêter l'alimentation électrique du moteur 7 lorsque l'un au moins des ensembles "bras-balai" BB est dans sa position extrême définie précédemment. Selon différentes variantes de réalisation du dispositif selon l'invention, les moyens de commande 10 sont également aptes à interrompre l'alimentation électrique du moteur 7 lorsque l'un au moins des ensembles "bras-balai" BB est dans sa position de repos définie précédemment.

Avantageusement également, les moyens de commande 10 sont aptes à générer un signal de démarrage du moteur 7 et/ou de la pompe 9 de circulation de liquide actif avec un ou plusieurs décalages temporels prédéfinis entre ces deux éléments, en fonction du procédé d'essuyage et de nettoyage spécifique mis en œuvre. Dans le cas où la pompe 9 est activée en premier, un tel décalage forme un temps d'anticipation pendant lequel le dispositif de distribution 15 est rempli par le liquide actif. En effet, l'arrêt prolongé de la pompe 9 génère une vidange des buses et des canalisations d'acheminement. Ce décalage temporel, autrement appelé temps de remplissage, garantit un bon remplissage du dispositif de distribution 15, le liquide est alors prêt à être projeté lorsque l'utilisateur commande la projection de liquide actif.

Les Figures 2 à 5 présentent schématiquement le déroulement du procédé selon l'invention, selon différentes variantes de mise en œuvre. Comme indiqué précédemment, l'application choisie est ici celle du dégivrage d'une surface vitrée S équipée d'un dispositif tel que celui qui vient d'être décrit et qui est schématiquement illustré par la Figure 1. Les Figures 2 à 5 sont des diagrammes dans lesquels l'axe des abscisses est celui du temps, et dans lesquels l'axe des ordonnées est représentatif d'une grandeur caractéristique du fonctionnement ou de l'arrêt, respectivement, du moteur 7 et de la distribution de liquide actif, notamment du fonctionnement de la pompe 9 de circulation de liquide actif. Ces grandeurs caractéristiques, non détaillées sur les figures peuvent, à titre d'exemples non exhaustifs, être, pour le moteur 7, un courant, une tension, ou un signal binaire représentatif de l'état de marche ou d'arrêt de ce moteur. Pour la pompe 9 de circulation de liquide actif, cette grandeur caractéristique peut également, à titre d'exemples non limitatifs, être un signal binaire représentatif de l'état de marche ou d'arrêt de cette pompe.

Sur chacune des Figures 2 à 5, la courbe inférieure représente l'état du moteur 7, et la courbe supérieure représente l'état du dispositif de distribution 15, notamment celui de la pompe 9 de circulation de liquide actif. Enfin, quelle que soit la variante de réalisation considérée, le dispositif selon l'invention est, à l'état initial du procédé selon l'invention, en position de repos, c'est-à-dire que chaque ensemble "bras-balai" BB est dans sa position de repos et que le moteur 7 et la pompe 9 de circulation de liquide actif sont à l'arrêt.

En référence à la Figure 2 qui illustre un premier mode de réalisation du procédé selon l'invention, celui-ci comporte une première étape E1, d'une première durée t1, pendant laquelle le moteur 7 est activé et pendant laquelle la pompe 9 de circulation de liquide actif est à l'arrêt. Pendant cette première étape E1, aucun liquide actif n'est donc distribué, et chaque ensemble "bras-balai" BB est entraîné en mouvement par le moteur 7. Selon une caractéristique de l'invention, la première durée t1 de la première étape E1 est définie pour que chaque ensemble "bras-balai" BB passe, pendant cette première étape, de sa position de repos à sa position extrême, précédemment définie. La première durée t1 de cette première étape E1 est ainsi typiquement de l'ordre de quelques dixièmes de seconde à une à deux secondes.

Dans une deuxième étape E2 du procédé selon l'invention, le moteur 7 est stoppé et, simultanément à cet arrêt dudit moteur 7, la pompe 9 de circulation de liquide actif est démarrée pendant une durée t2 correspondant au temps de remplissage du dispositif de distribution 15 par le liquide actif. Selon l'invention, le temps t2 de cette deuxième étape est défini pour que la quantité de liquide actif qui circule pendant ce temps t2 soit suffisante pour que le liquide actif remplisse les canalisations d'acheminement 5, tout en étant toutefois suffisamment faible pour qu'aucun liquide actif ne soit délivré par les buses de distribution 6. A titre d'exemple non limitatif, le temps t2 de cette deuxième étape E2 peut être de l'ordre de quelques dixièmes de seconde. Au cours de cette deuxième étape E2 du procédé selon l'invention, on réalise ainsi, alors que chaque ensemble "bras-balai" BB est à l'arrêt dans sa position extrême, un remplissage en liquide actif du circuit d'acheminement du dispositif de distribution 15 du dispositif d'essuyage et de nettoyage du véhicule selon l'invention.

Dans une troisième étape E3 du procédé selon l'invention, d'une durée t3, le moteur 7 est à nouveau démarré, la pompe 9 de circulation de liquide actif étant maintenue en fonctionnement. Selon l'invention, la durée t3 de la troisième étape E3 est sensiblement identique à la première durée t1 de la première étape E1, et elle est définie pour que, pendant cette période, chaque ensemble "bras-balai" BB revienne de sa position extrême à sa position de repos. La durée t3 de cette troisième étape E3 est donc, de manière similaire à la première durée t1 de la première étape E1, sensiblement de l'ordre de quelques dixièmes de seconde à une à deux secondes. En d'autres termes, pendant cette troisième étape E3 du procédé selon l'invention, chaque ensemble "bras-balai" BB revient à sa position repos et, simultanément, une quantité de liquide actif est délivrée par le dispositif de distribution 15, notamment par les buses de distribution 6. Dans son mouvement angulaire, chaque ensemble "bras-balai" BB réparti donc du liquide actif sur la surface vitrée S.

Au cours de cette troisième étape E3, au moins une partie du liquide actif est projetée en direction de la position extrême de l'ensemble "bras-balai" BB, c'est-à-dire dans une zone du pare-brise opposée à la direction d'avancement de l'ensemble "bras-balai" BB afin que les balais d'essuyage 2 n'essuient pas immédiatement le liquide actif projeté.

Dans une quatrième étape E4 du procédé selon l'invention, d'une durée t4, le moteur 7 et la pompe 9 de circulation de liquide actif sont simultanément stoppés. La durée t4 de cette quatrième étape E4 correspond à un temps d'action t4 du liquide actif sur la surface vitrée. Une telle durée t4 est définie pour permettre au liquide actif distribué et étalé au cours de la troisième étape E3 d'agir sur la surface vitrée S. A titres d'exemples non limitatifs, la durée t4 de cette quatrième étape peut être de l'ordre de quelques secondes à une minute.

Selon le premier mode de réalisation, le procédé selon l'invention est stoppé à l'issue de la quatrième étape E4 décrite ci-dessus, et l'utilisateur du véhicule doit commander une nouvelle succession des quatre étapes décrites ci-dessus s'il considère que l'opération de dégivrage n'est pas achevée de manière satisfaisante. Selon d'autres modes de réalisation, un capteur générant un signal représentatif de l'état de la surface vitrée S peut être intégré au dispositif selon l'invention. Les quatre étapes du procédé selon l'invention décrites ci-dessus pourront alors être reproduites selon des cycles successifs, jusqu'à ce que le signal généré par ce capteur prenne une valeur prédéfinie, représentative de l'achèvement de l'opération de dégivrage.

Tel qu'il vient d'être décrit, le procédé selon l'invention comporte peu d'étapes et est d'un pilotage simple, puisqu'il met en œuvre une simple succession d'ordres de démarrage et d'arrêt de deux éléments seulement du dispositif selon l'invention : la pompe 9 de circulation de liquide actif et le moteur 7. Par la mise en œuvre d'un moteur à sens unique de rotation, ce procédé est également peu coûteux, et il peut donc être mis en place sur un grand nombre de véhicules.

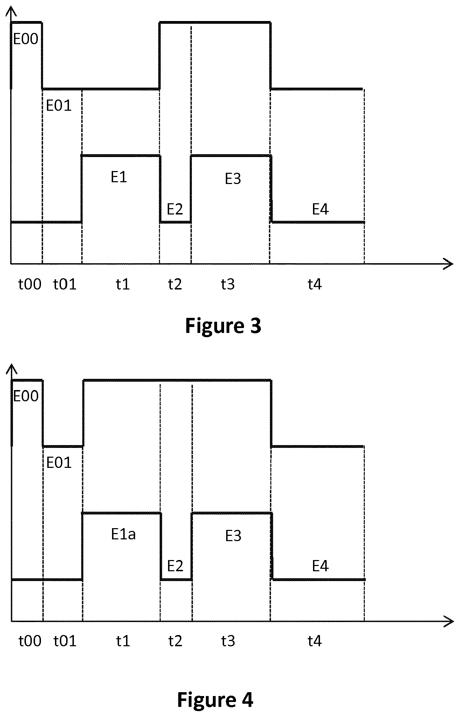

Les Figures 3, 4 et 5 illustrent différentes variantes de réalisation du procédé selon l'invention tel qu'il vient d'être décrit.

Selon la première variante de réalisation, plus particulièrement illustrée par la Figure 3, deux étapes préliminaires, respectivement E00 et E01, de durées respectives t00 et t01, sont commandées avant la première étape précédemment décrite. Plus précisément, au cours de la première étape préliminaire E00, d'une durée t00, la pompe 9 de circulation de liquide actif est démarrée, le moteur 7 étant à l'arrêt. Avantageusement, la durée t00 de cette première étape préliminaire est définie pour qu'une quantité prédéterminée de liquide actif soit délivrée par le dispositif de distribution 15, notamment via les buses de distribution 6. Chaque ensemble "bras-balai" BB étant dans sa position de repos, il s'ensuit que le liquide actif délivré va rester au voisinage de chaque balai d'essuyage 2 de chacun de ces ensembles et ruisseler autour desdits balais d'essuyage en les imprégnant. A titre d'exemples non limitatifs, la durée t00 de cette première étape préliminaire est avantageusement de l'ordre de quelques dixièmes de seconde à quelques secondes.

Au cours de la deuxième étape préliminaire E01, d'une durée t01, le dispositif de distribution 15 est stoppé, notamment par interruption de l'alimentation de la pompe 9 de circulation de liquide actif, tandis que le moteur 7 est maintenu à l'arrêt. Avantageusement, la durée t01 de cette deuxième étape préliminaire est définie pour permettre au liquide actif d'agir sur chaque balai d'essuyage 2. Ceci va permettre de dégivrer le balai d'essuyage 2 en tant que tel, en lui redonnant une certaine souplesse et éviter ainsi d'endommager la lame racleuse du balai. A titre d'exemples non limitatifs, cette durée t01 peut être de l'ordre de quelques secondes à une minute. Les quatre étapes E1, E2, E3, E4 précédemment décrites sont ensuite commandées, de manière similaire à ce qui a été exposé précédemment pour le premier mode de réalisation du procédé selon l'invention. En d'autres termes, dans cette première variante de réalisation, l'invention prévoit une première étape de dégivrage de chaque balai d'essuyage 2 préalablement au dégivrage de la surface vitrée S.

Dans une deuxième variante de réalisation, le procédé prévoit que simultanément à l'activation du moteur 7 pour amener l'ensemble "bras-balai" BB depuis la position de repos à la position extrême sur la surface vitrée S, le moyen de commande 10 active la distribution du liquide actif sur la surface vitrée S, notamment en alimentant électriquement la pompe 9. Cette modification de l'étape E1, appelé E1a, peut être réalisée comme première étape du procédé, ou alternativement après la mise en œuvre des deux étapes préliminaires E00 et E01 décrite ci-dessus. Lorsque, dans cette première étape E1a, chaque ensemble "bras-balai" BB passe de sa position de repos à sa position extrême sur la surface vitrée S, une quantité de liquide actif est délivrée par les buses de distribution 6 et étalée par lesdits ensembles "bras-balai" BB sur la surface vitrée S au cours de leur mouvement angulaire. Plus consommatrice de liquide actif que les autres modes de réalisation précédemment décrits, cette deuxième variante de réalisation peut toutefois permettre d'améliorer l'efficacité de l'opération de dégivrage et, par exemple, peut permettre qu'un seul cycle des étapes E00 à E4 ou Ea1 à E4 suffise à un dégivrage complet de la surface vitrée, en lieu et place de la répétition de plusieurs cycles de ces mêmes étapes.

Selon une variante non représentée, l'activation du moteur 7 pour amener l'ensemble "bras-balai" BB depuis la position de repos à la position extrême sur la surface vitrée S peut également être réalisée par une pluralité de pas et de temps d'arrêt successifs. Au lieu de faire un mouvement continu de l'ensemble « bras-balai » BB de la position de repos à la position extrême, on réalise alors une série de pas où à chaque arrêt, le liquide actif est projeté sur la surface vitrée.

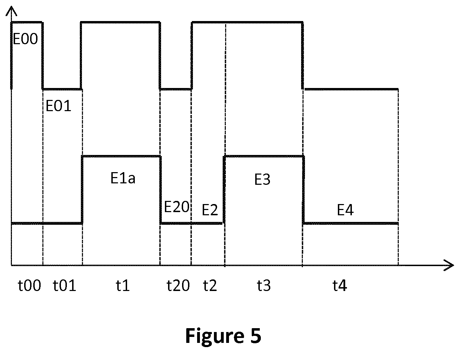

La troisième variante de réalisation, plus particulièrement illustrée par la Figure 5, met en œuvre l'étape Ela décrite ci-dessus où le passage de la position de repos à la position extrême est réalisé simultanément à la distribution du liquide actif sur la surface vitrée. Dans cette variante, une étape supplémentaire E20 est effectuée entre la première étape modifiée Ela et la deuxième étape E2. Plus précisément, pendant cette étape supplémentaire E20, d'une durée t20, le moteur 7 est stoppé, ainsi que le dispositif de distribution 15, notamment par interruption de l'alimentation électrique de la pompe 9 de circulation de liquide actif. Une quantité de liquide actif ayant été, au cours de la première étape E1a, délivrée et étalée sur la surface vitrée S, cette étape supplémentaire E20 constitue une étape d'action de ce liquide, avant la remise en marche de la pompe 9 de circulation du liquide actif et avant la remise en mouvement des ensemble "bras-balai" BB.

En d'autres termes, selon cette troisième variante de réalisation, on réalise successivement :
- au cours des première et deuxième étapes préliminaires E00 et E01, un dégivrage de chaque balai d'essuyage 2, par distribution de liquide actif via les buses de distribution 6 (première étape préliminaire E00), puis par action de ce liquide (deuxième étape préliminaire E01), chaque ensemble "bras-balai" BB restant dans sa position de repos,
- distribution et étalement, par le mouvement angulaire de chaque ensemble "bras-balai" BB entre sa position de repos et sa position extrême, de liquide actif sur la surface vitrée S (première étape E1a),
- action du liquide ainsi étalé sur la surface vitrée S (étape supplémentaire E20),
- remplissage du circuit de distribution de fluide (deuxième étape E2), cette étape peut être facultative si le circuit de distribution de fluide ne s'est pas vidé,
- distribution et étalement, par le mouvement angulaire de chaque ensemble "bras-balai" BB entre sa position extrême et sa position de repos, de liquide actif sur la surface vitrée S (troisième étape E3),
- action du liquide ainsi étalé sur la surface vitrée S (quatrième étape E4).

Bien entendu, diverses modifications peuvent être apportées par l'homme du métier au dispositif et au procédé qui viennent d'être décrits à titre d'exemple non limitatif, dès lors que l'on met en œuvre au moins un moteur à sens unique de rotation ainsi que des moyens de commande aptes, d'une part, à piloter le mouvement angulaire d'au moins un ensemble "bras-balai" sur la surface vitrée à dégivrer/nettoyer et, d'autre part, à commander un dispositif de distribution du liquide actif utilisé pour l'opération de dégivrage/nettoyage. Le pilotage du mouvement angulaire de l'au moins un ensemble "bras-balai" peut notamment prévoir un arrêt de l'ensemble "bras-balai" dans sa position extrême ou dans sa position de repos.

De façon facultative, l'achèvement de l'opération de dégivrage peut prévoir un cycle de balayage de manière à évacuer le liquide actif présent sur le pare-brise.

De façon facultative, l'achèvement de l'opération de dégivrage peut également prévoir de manière optionnelle un cycle de rinçage du pare-brise en utilisant le liquide lave-glace stocké dans le bocal 3.

En tout état de cause, l'invention ne saurait se limiter aux modes de réalisation spécifiquement décrits dans ce document.

Elle s'étend en en particulier, aux cas où le passage du ou des ensembles "bras-balai" de leur position de repos à leur position extrême s'effectue non pas en un unique mouvement continu, mais en une succession d'étapes élémentaires au cours desquelles cet ou ces ensembles effectuent des déplacements angulaires élémentaires sur la surface vitrée.

## Revendications

1. Dispositif d'essuyage et de nettoyage d'une surface vitrée (S) d'un véhicule automobile, comprenant au moins :
- un moteur (7) électrique à courant continu à sens unique de rotation apte à déplacer au moins un ensemble « bras-balai » (BB) formé par un bras d'entraînement (1) et un balai d'essuyage (2) par l'intermédiaire d'une timonerie (14), ledit ensemble « bras-balai » étant déplacé selon un mouvement va et vient angulaire entre une position de repos (11) et une position extrême (12) opposée à la position de repos (11) par rapport à un secteur angulaire (13) sur la surface vitrée (S),
- un dispositif de distribution (15) d'un liquide actif sur la surface vitrée (S), le liquide actif étant de préférence un liquide dégivrant ou un liquide démoustiquant,
- un moyen de commande (10) configuré pour contrôler, d'une part, le fonctionnement du moteur (7) pour arrêter l'ensemble "bras-balai" (BB) pendant une durée non-nulle et, d'autre part, la distribution de liquide actif par le dispositif de distribution (15), le dispositif étant **caractérisé en ce que** le moyen de commande (10) est configuré pour contrôler la distribution de liquide actif et le moteur (7) avec un décalage temporel non-nul entre eux et pour (10) activer le moteur (7) et la distribution de liquide actif simultanément au cours d'une période du procédé.

2. Dispositif selon la revendication 1, dans lequel le moyen de commande (10) est configuré pour contrôler le fonctionnement du moteur (7) de manière à arrêter l'ensemble "bras-balai" (BB) lorsque l'ensemble "bras-balai" (BB) est dans sa position de repos et/ou sa position extrême.

3. Dispositif selon la revendication 1 ou 2, dans lequel le dispositif de distribution (15) comprend au moins un ensemble de buses de distribution (6) agencées sur le balai d'essuyage (2) et/ou sur le bras d'entraînement (1).

4. Dispositif selon la revendication 3, dans lequel le dispositif de distribution (15) comprend au moins un réservoir de stockage (8) d'un liquide actif, un ensemble de canalisations (5) d'acheminement du liquide actif entre le réservoir de stockage (8) et les buses de distribution (6), et une pompe (9) apte à réaliser la circulation de ce liquide actif dans cet ensemble de canalisations (5) et ces buses de distribution (6).

5. Dispositif selon l'une quelconque des revendications précédentes, dans lequel le moyen de commande (10) contrôle le moteur (7) par une succession d'ordres de mise en marche et d'arrêt de celui-ci.

6. Dispositif selon la revendication 4, comprenant un dispositif de projection d'un liquide lave-glace qui comprend un bocal (3) de retenu dudit liquide lave-glace distinct du réservoir de stockage (8) du liquide actif, au moins une partie de l'ensemble de canalisations (5) d'acheminement et les buses de distribution (6) étant empruntés par le liquide lave-glace et par le liquide actif.

7. Procédé d'essuyage et de nettoyage d'une surface vitrée (S) mettant en œuvre un dispositif d'essuyage et de nettoyage selon l'une quelconque des revendications 1 à 6, procédé au cours duquel :
- le moyen de commande (10) active le moteur (7) et la distribution de liquide actif avec un décalage temporel non-nul entre eux, la distribution de liquide actif étant de préférence activée avant le moteur (7) et
- le moyen de commande (10) active le moteur (7) et la distribution de liquide actif simultanément au cours d'une période du procédé.

8. Procédé selon la revendication 7, au cours duquel :
- le moyen de commande (10) active le moteur (7) pour amener l'ensemble "bras-balai" (BB) depuis la position de repos (11) à la position extrême (12) sur la surface vitrée (S),
- le moyen de commande (10) désactive le moteur (7) après une première durée déterminée (t1) correspondant au temps nécessaire pour passer de la position de repos (11) à la position extrême (12),
- le moyen de commande (10) active la distribution du liquide actif (S) et maintient désactivé le moteur (7) pendant un temps (t2) correspondant au remplissage du dispositif de distribution (15) par le liquide actif,
- le moyen de commande (10) active le moteur (7) et le dispositif de distribution (16) simultanément pendant une deuxième durée (t3) correspondant au temps nécessaire pour passer de la position extrême (12) à la position de repos (11),
- le moyen de commande (10) désactive le moteur (7) et le dispositif de distribution (15) et les maintient désactivés pendant un temps d'action (t4) du liquide actif.

9. Procédé selon la revendication 8, où préalablement à l'activation du moteur (7) pour amener l'ensemble "bras-balai" (BB) depuis la position de repos (11) à la position extrême (12) sur la surface vitrée (S), le moyen de commande (10) active la distribution du liquide actif sur la surface vitrée (S) et maintient désactivé le moteur (7) pendant un temps d'action (t01) du liquide actif.

10. Procédé selon l'une quelconque des revendications 8 ou 9, au cours duquel, simultanément à l'activation du moteur (7) pour amener l'ensemble "bras-balai" (BB) depuis la position de repos (11) à la position extrême (12) sur la surface vitrée (S), le moyen de commande (10) active la distribution du liquide actif sur la surface vitrée (S).

11. Procédé selon la revendication précédente, au cours duquel l'activation du moteur (7) pour amener l'ensemble "bras-balai" (BB) depuis la position de repos (11) à la position extrême (12) sur la surface vitrée (S) est réalisée par une pluralité de pas et de temps d'arrêt successifs.

12. Procédé selon l'une quelconque des revendications 10 ou 11, où, une fois la position extrême (12) atteinte, le moyen de commande (10) désactive le moteur (7) et le dispositif de distribution (15) et les maintient désactivés pendant un temps d'action (t20) du liquide actif.

## Patentansprüche

1. Vorrichtung zum Wischen und Reinigen einer Glasfläche (S) eines Kraftfahrzeugs, die mindestens enthält:
- einen Gleichstrom-Elektromotor (7) mit nur einer Drehrichtung, der mindestens eine von einem Antriebsarm (1) und einem Wischerblatt (2) gebildete "Antriebsarm/Wischerblatt"-Einheit (BB) mittels eines Gestänges (14) verschieben kann, wobei die "Antriebsarm/Wischerblatt"-Einheit gemäß einer winkelmäßigen Hin- und Herbewegung zwischen einer Ruhestellung (11) und einer der Ruhestellung (11) entgegengesetzten Endstellung (12) bezüglich eines Winkelsektors (13) auf der Glasfläche (S) verschoben wird,
- eine Ausgabevorrichtung (15) einer aktiven Flüssigkeit auf die Glasfläche (S), wobei die aktive Flüssigkeit vorzugsweise eine Enteisungsflüssigkeit oder eine Insektenentfernungsflüssigkeit ist,
- eine Steuereinrichtung (10), die konfiguriert ist, einerseits den Betrieb des Motors (7), um die "Antriebsarm/Wischerblatt"-Einheit (BB) während einer Dauer ungleich Null anzuhalten, und andererseits die Ausgabe von aktiver Flüssigkeit durch die Ausgabevorrichtung (15) zu steuern,
wobei die Vorrichtung **dadurch gekennzeichnet ist, dass** die Steuereinrichtung (10) konfiguriert ist, die Ausgabe aktiver Flüssigkeit und den Motor (7) mit einer Zeitverschiebung ungleich Null zwischen ihnen zu steuern, und den Motor (7) und die Ausgabe aktiver Flüssigkeit während einer Periode des Verfahrens gleichzeitig zu (10) aktivieren.

2. Vorrichtung nach Anspruch 1, wobei die Steuereinrichtung (10) konfiguriert ist, den Betrieb des Motors (7) so zu steuern, dass die "Antriebsarm/Wischerblatt"-Einheit (BB) angehalten wird, wenn die "Antriebsarm/Wischerblatt"-Einheit (BB) in ihrer Ruhestellung und/oder ihrer Endstellung ist.

3. Vorrichtung nach Anspruch 1 oder 2, wobei die Ausgabevorrichtung (15) mindestens eine Einheit von Ausgabedüsen (6) enthält, die auf dem Wischerarm (2) und/oder auf dem Antriebsarm (1) angeordnet sind.

4. Vorrichtung nach Anspruch 3, wobei die Ausgabevorrichtung (15) mindestens einen Speichertank (8) einer aktiven Flüssigkeit, eine Einheit von Rohrleitungen (5) zur Beförderung der aktiven Flüssigkeit zwischen dem Speichertank (8) und den Ausgabedüsen (6) und eine Pumpe (9) enthält, die die Strömung dieser aktiven Flüssigkeit in dieser Einheit von Rohrleitungen (5) und diesen Ausgabedüsen (6) herstellen kann.

5. Vorrichtung nach einem der vorhergehenden Ansprüche, wobei die Steuereinrichtung (10) den Motor (7) durch eine Folge von Start- und Stillstandsbefehlen von diesem steuert.

6. Vorrichtung nach Anspruch 4, die eine Vorrichtung zum Spritzen einer Scheibenwaschflüssigkeit enthält, die einen Rückhaltebehälter (3) der Scheibenwaschflüssigkeit anders als der Speichertank (8) der aktiven Flüssigkeit enthält, wobei mindestens ein Teil der Einheit von Beförderungsrohrleitungen (5) und die Ausgabedüsen (6) von der Scheibenwaschflüssigkeit und von der aktiven Flüssigkeit benutzt werden.

7. Verfahren zum Wischen und Reinigen einer Glasfläche (S), das eine Wisch- und Reinigungsvorrichtung nach einem der Ansprüche 1 bis 6 verwendet, Verfahren, während dessen:
- die Steuereinrichtung (10) den Motor (7) und die Ausgabe aktiver Flüssigkeit mit einer Zeitverschiebung ungleich Null zwischen ihnen aktiviert, wobei die Ausgabe aktiver Flüssigkeit vorzugsweise vor dem Motor (7) aktiviert wird, und
- die Steuereinrichtung (10) den Motor (7) und die Ausgabe aktiver Flüssigkeit während einer Periode des Verfahrens gleichzeitig aktiviert.

8. Verfahren nach Anspruch 7, während dessen:
- die Steuereinrichtung (10) den Motor (7) aktiviert, um die "Antriebsarm/Wischerblatt"-Einheit (BB) von der Ruhestellung (11) in die Endstellung (12) auf der Glasfläche (S) zu bringen,
- die Steuereinrichtung (10) den Motor (7) nach einer ersten bestimmten Dauer (t1) entsprechend der Zeit deaktiviert, die notwendig ist, um von der Ruhestellung (11) in die Endstellung (12) überzugehen,
- die Steuereinrichtung (10) die Ausgabe der aktiven Flüssigkeit (S) aktiviert und den Motor (7) während einer Zeit (t2) deaktiviert hält, die dem Füllen der Ausgabevorrichtung (15) mit der aktiven Flüssigkeit entspricht,
- die Steuereinrichtung (10) den Motor (7) und die Ausgabevorrichtung (16) während einer zweiten Dauer (t3) gleichzeitig aktiviert, die der Zeit entspricht, die notwendig ist, um von der Endstellung (12) in die Ruhestellung (11) überzugehen,
- die Steuereinrichtung (10) den Motor (7) und die Ausgabevorrichtung (15) deaktiviert und sie während einer Wirkzeit (t4) der aktiven Flüssigkeit deaktiviert hält.

9. Verfahren nach Anspruch 8, wobei vor der Aktivierung des Motors (7), um die "Antriebsarm/Wischerblatt"-Einheit (BB) von der Ruhestellung (11) in die Endstellung (12) auf der Glasfläche (S) zu bringen, die Steuereinrichtung (10) die Ausgabe der aktiven Flüssigkeit auf die Glasfläche (S) aktiviert und den Motor (7) während einer Wirkzeit (t01) der aktiven Flüssigkeit deaktiviert hält.

10. Verfahren nach einem der Ansprüche 8 oder 9, während dessen gleichzeitig mit der Aktivierung des Motors (7), um die "Antriebsarm/Wischerblatt"-Einheit (BB) von der Ruhestellung (11) in die Endstellung (12) auf der Glasfläche (S) zu bringen, die Steuereinrichtung (10) die Ausgabe der aktiven Flüssigkeit auf die Glasfläche (S) aktiviert.

11. Verfahren nach dem vorhergehenden Anspruch, während dessen die Aktivierung des Motors (7), um die "Antriebsarm/Wischerblatt"-Einheit (BB) von der Ruhestellung (11) in die Endstellung (12) auf der Glasfläche (S) zu bringen, durch eine Vielzahl von aufeinanderfolgenden Schritten und Stillstandszeiten durchgeführt wird.

12. Verfahren nach einem der Ansprüche 10 oder 11, wobei, wenn die Endstellung (12) erreicht ist, die Steuereinrichtung (10) den Motor (7) und die Ausgabevorrichtung (15) deaktiviert und sie während einer Wirkzeit (t20) der aktiven Flüssigkeit deaktiviert hält.

## Claims

1. A device for wiping and cleaning a glazed surface (S) of a motor vehicle, comprising at least:
- a direct current electric motor (7) rotating in a single direction and capable of moving at least one "wiper arm" unit (BB) formed by a drive arm (1) and a wiper blade (2) by means of a linkage (14), said "wiper arm" unit being moved according to an angular to-and-fro movement between a rest position (11) and an end position (12) opposite the rest position (11) in relation to an angular sector (13) of the glazed surface (S),
- a device (15) for dispensing an active liquid onto the glazed surface (S), the active liquid preferably being a de-icing liquid or an inset-removing liquid,
- a control means (10) configured to control, on the one hand, the operation of the motor (7) in order to stop the "wiper arm" unit (BB) for a non-zero duration and, on the other hand, the dispensing of the active liquid by the dispensing device (15),
the device is **characterized in that** the control means (10) is configured to control the dispensing of active liquid and the motor (7) with a non-zero time shift between them and to activate the motor (7) and the dispensing of active liquid simultaneously during a period of the method.

2. The device as claimed in claim 1, in which the control means (10) is configured to control the operation of the motor (7) in such a manner as to stop the "wiper arm" unit (BB) when the "wiper arm" unit (BB) is in its rest position and/or its extreme position.

3. The device as claimed in claim 1 or 2, in which the dispensing device (15) comprises at least one set of dispensing nozzles (6) arranged on the wiper blade (2) and/or on the drive arm (1).

4. The device as claimed in any one of claims 3, in which the dispensing device (15) comprises at least one tank (8) for storing an active liquid, a set of pipes (5) for feeding the active liquid between the storage tank (8) and the distribution nozzles (6), and a pump (9) adapted to circulate this active liquid in this set of pipes (5) and these dispensing nozzles (6).

5. The device as claimed in any one of the preceding claims, in which the control means (10) control the motor (7) via a succession of orders to start and stop the latter.

6. The device as claimed in claim 4, comprising a device for spraying a window washer liquid that comprises a jar (3) for retaining said window washing liquid separate from the storage tank (8) for the active liquid, at least a part of the set of feed pipes (5) and the dispensing nozzles (6) being taken by the window washer liquid and by the active liquid.

7. A method of wiping and cleaning a glazed surface (S) using a wiping and cleaning device as claimed in any one of claims 1 to 6, in which method:
- the control means (10) activates the motor (7) and the dispensing of active liquid with a non-zero time shift between them, distribution of active liquid preferably being activated before the motor (7),
- the control means (10) activates the motor (7) and the dispensing of active liquid simultaneously during a period of the method.

8. The method as claimed in claim 7, during which:
- the control means (10) activates the motor (7) to move the "wiper arm" unit (BB) from the rest position (11) to the extreme position (12) on the glazed surface (S),
- the control means (10) deactivates the motor (7) after a first particular time (t1) corresponding to the time necessary to move from the rest position (11) to the extreme position (12),
- the control means (10) activates the dispensing of the active liquid (S) and keeps the motor (7) deactivated for a time (t2) corresponding to the filling of the dispensing device (15) with the active liquid,
- the control means (10) activates the motor (7) and the dispensing device (16) simultaneously for a second time (t3) corresponding to the time necessary to move from the extreme position (12) to the rest position (11),
- the control means (10) deactivate the motor (7) and the dispensing device (15) and keeps them deactivated for a time (t4) of action of the active liquid.

9. The method as claimed in claim 8 in which, before the activation of the motor (7) to move the "wiper arm" unit (BB) from the rest position (11) to the extreme position (12) on the glazed surface (S), the control means (10) activates the dispensing of the active liquid onto the glazed surface (S) and keeps the motor (7) deactivated for a time (t01) of action of the active liquid.

10. The method as claimed in either one of claims 8 or 9, during which, simultaneously with the activation of the motor (7) to move the "wiper arm" unit (BB) from the rest position (11) to the extreme position (12) on the glazed surface (S), the control means (10) activates the dispensing of the active liquid onto the glazed surface (S).

11. The method as claimed in the preceding claim, during which the activation of the motor (7) to move the "wiper arm" unit (BB) from the rest position (11) to the extreme position (12) on the glazed surface (S) is effected by a plurality of successive steps and stopping times.

12. The method as claimed in either one of claims 10 or 11, in which, when the extreme position (12) has been reached, the control means (10) deactivates the motor (7) and the dispensing device (15) and keeps them deactivated for a time (t20) of action of the active liquid.
